# EUROPÄISCHE PATENTSCHRIFT

(11) **EP 1 201 946 B1**
(45) Veröffentlichungstag und Bekanntmachung des Hinweises auf die Patenterteilung: **27.04.2005**
(21) Anmeldenummer: 01125544.5
(22) Anmeldetag: 25.10.2001
(51) Int. Cl.: F16B 39/284

(54) **Mutter mit einer Klemmsicherung**
Nut with clamping part for securing it
Ecrou avec dispositif de fixation par serrage

(30) Priorität: 25.10.2000 DE 10052915
(43) Veröffentlichungstag der Anmeldung: 02.05.2002
(73) Patentinhaber: NEDSCHROEF PLETTENBERG GmbH, D-58840 Plettenberg (Holthausen) (DE)
(72) Erfinder: Hop, René Michael, Dr. Ir., 5211 TM 's-Hertogenbosch (NL)
(74) Vertreter: Alber, Norbert, Dipl.-Ing.

(56) Entgegenhaltungen:
- EP-A- 0 460 335
- DE-A- 1 909 229
- US-A- 4 893 977

## Beschreibung

### 1. Anwendungsgebiet

Die Erfindung bezieht sich auf eine Mutter mit einer Klemmsicherung und einem Antriebsteil. Der Antriebsteil und/oder die Klemmsicherung ist mit einem Innengewinde ausgestattet. Der Antriebsteil der Mutter ist vorzugsweise auf seiner äußeren Umfangsfläche in Form eines Mehrkants ausgebildet, um mit einem Werkzeug an der Mutter angreifen zu können. An den Antriebsteil schließt sich in axialer Längsrichtung die Klemmsicherung zur lösbaren Festlegung der Mutter an einem entsprechenden Außengewinde, insbesondere einer Gewindestange oder Schraube, an.

Die Klemmsicherung besteht aus mehreren an den Antriebsteil unmittelbar angeformten Klemmzungen, wobei benachbarte Klemmzungen mit in axialer Richtung verlaufenden Schlitzen voneinander in Umfangsrichtung der Mutter gesehen beabstandet sind. Die Mutter ist mit einem Innengewinde im Antriebsteil und in der Klemmsicherung ausgestattet. Der Innendurchmesser des Innengewindes nimmt in der Klemmsicherung mit zunehmendem axialen Abstand von dem Antriebsteil zumindest abschnittsweise ab. (EP 0 460 335 A).

### 2. Technischer Hintergrund

Muttern mit einer Klemmsicherung sind seit langem bekannt und gebräuchlich. Sie bestehen aus einer an sich bekannten Mutter mit Innengewinde zum Aufschrauben auf einen Gewindebolzen, eine Gewindestange oder eine Schraube. Das Innengewinde ist üblicherweise ein nach DIN ausgelegtes Standardgewinde, kann aber prinzipiell auch beliebig gestaltet sein.

In axialer Richtung schließt sich an den Grundkorpus der Mutter, der einen unrunden Außenumfang besitzt und deshalb als Antriebsteil bezeichnet wird und in den meisten Fällen an seinem Umfang als Sechskant zum Ansetzen eines Schrauben- oder Ringschlüssels ausgebildet ist, eine sogenannte Klemmsicherung an. Die Klemmsicherung besteht aus mehreren Klemmzungen, die sich an den Antriebsteil unmittelbar in axialer Richtung verlaufend anschließen. Sie sind vorzugsweise mit einem Innengewinde gleicher Steigung wie der Antriebsteil der Mutter versehen. In einer üblichen Ausgestaltung sind die Klemmzungen in axialer Richtung der Mutter radial nach innen geneigt, d. h. daß der Innendurchmesser des Innengewindes in der Klemmsicherung mit zunehmendem Abstand vom Antriebsteil zumindest abschnittsweise abnimmt.

Beim Aufschrauben der Mutter auf eine Gewindestange mit einem entsprechenden Außengewinde, beginnend mit dem Antriebsteil, drückt die Gewindestange die Klemmzungen nach außen, wobei bei geeigneter Auswahl des Neigungswinkels der Klemmzungen gegen die Längsachse der Mutter sowie der verwendeten Werkstoffe dieser Vorgang innerhalb der elastischen Verformung der Klemmzungen abläuft.

Die Klemmzungen sind unmittelbar an den Antriebsteil der Mutter angeformt bzw. werden bei der Herstellung der Mutter mit ausgebildet. Die Klemmzungen sind jeweils von in axialer Richtung verlaufenden Schlitzen in der Klemmsicherung von benachbarten Klemmzungen getrennt.

Mit dem Auseinanderdrücken der Klemmzungen in radialer Richtung beim Aufschrauben auf einen Gewindebolzen odgl. ist eine Klemmwirkung erzielbar, deren Klemmmoment auch nach mehrmaligem Auf- und Abschrauben der Mutter praktisch den gleichen Wert hat, solange die Elastizitätsgrenzen für die Verformung der Klemmzungen nicht überschritten werden.

Bekannt sind Klemmzungen, deren Breite in Umfangsrichtung der Mutter sowie radiale Dicke bzw. Wandstärke über ihre gesamte Fläche konstant ist. Sie bieten den Vorteil, daß sie einfach herzustellen sind, z. B. durch einfaches Einschneiden der Schlitze, Jedoch weisen Muttern mit derartigen Klemmzungen einen ungünstigen Verlauf des Klemmmoments auf, das proportional zur Biegesteifigkeit und zum Federweg der Klemmzunge ist. Aufgrund der konstanten Materialstärke haben die Klemmzungen an ihrem dem Antriebsteil abgewandten Ende eine hohe Biegesteifigkeit, die beim Aufschrauben der Mutter zu einer ungleichmäßigen oder zu großen Flächenpressung in diesem Bereich der Klemmzunge an das Gewinde führt, da der Federweg beim Auseinanderdrücken zu lang und damit die Federkraft der Klemmzunge zu hoch wird. Daraus resultiert häufig die Beschädigung des Außengewindes der Schraube oder des Innengewindes an den Klemmzungen und/oder das Festsitzen der Mutter auf dem Gewinde.

Desweiteren sind Muttern bekannt, bei denen in radialer Richtung gesehen mit zunehmendem Abstand vom Antriebsteil die Wandstärke der Klemmzungen abnimmt. Das bedeutet, daß an dem dem Antriebsteil in axialer Richtung abgewandten Ende der Klemmzunge ihre radiale Wandstärke kleiner ist als im unmittelbar sich an den Antriebsteil anschließenden Bereich. Damit kann ein gleichmäßiges Klemmmoment der Klemmzunge realisiert werden. Da im Bereich geringerer Wandstärke mit einer entsprechend geringeren Biegesteifigkeit die Klemmzunge am weitesten radial nach innen geneigt ist, ist der Federweg beim Auseinanderdrücken der Klemmzungen beim Aufschrauben auf ein Außengewinde am größten. Der Bereich der Klemmzunge mit hoher Biegesteifigkeit bzw. großer radialer Wandstärke hat in unmittelbarem Anschluß an den Antriebsteil nur einen geringen Federweg. Bei geeigneter Auswahl des Neigungswinkels der Klemmzungen gegen die Längsachse der Mutter sowie der Abnahme ihrer Wandstärke kann eine konstante Zunahme des Klemmmoments der Klemmsicherung beim Aufschrauben erreicht werden. Das bedeutet, daß über die gesamte Fläche in axialer und in Umfangsrichtung der Klemmzunge gesehen, die von der Klemmzunge radial nach innen auf das Außengewinde der Gewindestange ausgeübte Klemmwirkung bzw. Federkraft gleich ist.

Als nachteilig hierbei ist jedoch anzusehen, daß die Herstellung einer Mutter mit Klemmzungen mit veränderlichen Wandstärken erheblichen Fertigungsaufwand innerhalb engster Toleranzen erfordert. Geringfügige Abweichungen führen zum Abbrechen der Klemmzungen oder zu unerwünscht hohen oder niedrigen Klemmmomenten einer Klemmzunge. Die Herstellung unter wirtschaftlichen Verhältnissen ist derzeit nicht möglich.

### 3. Darstellung der Erfindung

### a) Technische Aufgabe

Ausgehend vom Stand der Technik hat sich die Erfindung die Aufgabe gestellt, eine Mutter mit Klemmsicherung derart zu gestalten, daß die Klemmsicherung, auch bei wiederholtem Aufschrauben, ein gleichbleibendes Klemmmoment ausübt, die Klemmwirkung der Klemmzunge an dem Außengewinde, auf das die Mutter aufgeschraubt ist, über die gesamte Fläche im wesentlichen konstant ist, und die Herstellung der Mutter mit geringstem Aufwand möglich ist.

Die Mutter kann in einem Kalt- oder Warmfließpressverfahren oder einem sonstigen, dem Fachmann bekannten Massivumformverfahren hergestellt werden. Die Klemmsicherung wird z.B. beim Fließpressen am Antriebsteil ausgeformt und die einzelnen Zungen durch Ausstanzen der axialen Schlitze erhalten, wobei hier die Schlitze derart ausgebildet werden, daß das gewünschte Profil der Klemmzungen erhalten wird. Danach wird die Mutter und die Klemmsicherung mit einem Innengewinde versehen, was vorzugsweise in einem ebenfalls an sich bekannten spanabhebenden Verfahren erfolgt. Hierbei ist darauf zu achten, daß die Klemmzungen durch das Gewindeschneiden nicht radial nach außen gebogen werden. Letztlich kann die Mutter in eine konische Matrize eingepresst werden, um die Klemmzungen in einem gewünschten Winkel gegen die Längsachse radial nach innen zu neigen.

### b) Lösung der Aufgabe

Erfindungsgemäß wird diese Aufgabe durch die kennzeichnenden Merkmale des Anspruchs 1 gelöst.

Der Kerngedanke der Erfindung besteht darin, daß in Umfangsrichtung der Mutter bzw. der Klemmsicherung die Breite der Klemmzungen mit zunehmendem Abstand vom Antriebsteil abnimmt. Dabei ist es im Rahmen der Erfindung beliebig, ob die Erstreckung in Umfangsrichtung einer Klemmzunge abnimmt, das heißt sie in axialer Richtung im wesentlichen konisch zuläuft, oder ob die absolute Breite in Umfangsrichtung der Klemmzungen konstant bleibt und deren Klemmmoment mit weiter unten beschriebenen Durchbrüchen reduziert wird.

Die beanspruchte Formgebung der Klemmzungen führt zu einer Reduzierung der Wirkbreite der Klemmzungen, d. h. die tatsächlich an einer Gewindestange anliegende Breite der Klemmzungen nimmt mit zunehmenden Abstand vom Antriebsteil ab.

Mit der Verringerung der Erstreckung der Klemmzungen in Umfangsrichtung wird erreicht, daß an dem dem Antriebsteil abgewandten Bereich der Klemmzungen sie über eine lediglich geringe Federkraft bzw. Biegesteifigkeit verfügen. Da jedoch der Federweg aufgrund der Verringerung des Innendurchmessers des Innengewindes der Mutter hier am größten ist, kann in diesem Bereich eine Normalkraft von der Klemmzunge auf das Außengewinde ausgeübt werden, die derjenigen im unmittelbar dem Antriebsteil benachbarten Abschnitt der Klemmzunge gleicht. Hier ist die Federkraft der in Umfangsrichtung wesentlich breiteren Klemmzunge größer, der Federweg jedoch erheblich kleiner. Mit der über die gesamte axiale Ausdehnung der Klemmzunge im wesentlichen konstanten Normalkraft, bei geeigneter Materialwahl, wird eine gleichmäßige Flächenpressung bzw. über den Reibungswiderstand zwischen Klemmzungen und Außengewinde ein gleichmäßiges Klemmmoment realisiert.

Finden die Biegevorgänge innerhalb der Elastizitätsgrenzen des Materials statt, kann die Klemmwirkung mit konstantem Klemmmoment auch nach mehrmaligem Aufschrauben aufrecht erhalten werden. Dazu ist es auch notwendig, bei der Herstellung der Muttern Werkstoffe mit konstanten Festigkeiten bei geringen Toleranzen zu verwenden.

Die Kanten der Klemmzungen können, besonders an den der Schraube zugewandten Innenseiten, angeschrägt oder abgerundet sein, um das Aufschrauben der Mutter zu erleichtern.

Im Rahmen der Erfindung ist es unerheblich, ob die Breite der Klemmzunge an ihren beiden Flanken, die den trennenden Schlitzen zugewandt sind, symmetrisch abnimmt oder hier jeweils ein unterschiedliches Profil gewählt wird.

Vorteilhafte Ausgestaltungen der Erfindung sind Gegenstand von Unteransprüchen.

Anstatt die Klemmzungen vom Antriebsteil weg in axialer Richtung konisch zulaufen zu lassen, können die seitlichen Flanken achsparallel verlaufen und in der Mitte der Zunge ist ein radialer Durchbruch oder eine Ausnehmung vorhanden, dessen Breite sich in Umfangsrichtung mit zunehmendem axialen Abstand vom Antriebsteil vergrößert. Das bedeutet, daß die ursprünglich in Umfangsrichtung durchgehend verlaufende, breite Klemmzunge in zwei benachbarte Klemmzungen aufgeteilt ist, bei denen der Abstand zwischen den benachbarten Flanken, die die in Umfangsrichtung seitliche Begrenzung des Durchbruchs bilden, in axialer Richtung zunimmt. In dieser Ausführung weisen die jeweiligen Flanken der beiden Klemmzunge ein unterschiedliches Profil auf.

Eine ähnliche Wirkung kann dadurch erreicht werden, daß in axialer Richtung mehrere radiale Durchbrüche mit zunehmendem Durchmesser, vorzugsweise runde Bohrungen, in der Klemmzunge vorhanden sind, wie auch in der Zeichnung weiter unten dargestellt. Damit wird die Erstreckung der Klemmzungen in Umfangsrichtung mit wachsendem axialen Abstand vom Antriebsteil reduziert, entsprechend nimmt die Federkraft ab.

Der Innendurchmesser des Innengewindes der Klemmsicherung kann vorteilhafterweise dadurch reduziert, daß die Klemmzungen gegen die Längsachse der Mutter radial nach innen geneigt sind. Daraus folgt, daß der gegenseitige Abstand beispielsweise einander auf dem Umfang der Mutter gegenüberliegender Klemmzungen mit zunehmendem axialem Abstand vom Antriebsteil abnimmt.

Vorzugsweise verfügt die Klemmsicherung über sechs Klemmzungen. Bei einer geringeren Anzahl an Zungen ist die Biegesteifigkeit einer einzelnen Zunge, die sich dann über einen großen Winkelbereich des Kreisumfanges erstreckt, aufgrund ihrer geometrischen Form zu hoch. Bei einer höheren Anzahl an Klemmzungen ist bei den heute üblichen Werkstoffen für Muttern und Klemmsicherungen die Klemmwirkung einer einzelnen Zunge aufgrund nicht ausreichender Materialfestigkeiten zu gering.

Die Klemmzungen könnten dann zwar in größerer Wandstärke ausgeführt werden, doch bedeutet dies unnötigen Materialeinsatz und eine aufwendigere Herstellung.

Insbesondere ist vorgeschlagen, daß die Breite der Klemmzungen stetig abnimmt. Das bedeutet, daß die Flanken der Klemmzungen keine Vorsprünge oder Kanten aufweisen und auch keine radialen Durchbrüche in den Klemmzungen vorhanden sind. Die genaue Formgebung ist im Rahmen der Erfindung beliebig. Die Flanke kann ein gerades oder beliebig gekrümmtes, z. B. konkaves oder konvexes Profil aufweisen. Eine besonders einfach herzustellende Ausgestaltung besteht darin, daß die Breite in Umfangsrichtung linear abnimmt, beziehungsweise die Klemmzunge von der Seite betrachtet trapezförmig ist, wobei die kürzere Kante des Trapezes vom Antriebsteil abgewandt ist.

Vorzugsweise ist die radiale Dicke oder Wandstärke der Klemmzungen über ihre gesamte axiale und in Umfangsrichtung reichende Erstreckung konstant. Dadurch ist die Federkraft bzw. Klemmwirkung lediglich von der Breite der Zunge in Umfangsrichtung sowie dem axialen Abstand vom Antriebsteil abhängig. Außerdem ist die Herstellung einer Zunge mit konstanter radialer Wandstärke wesentlich einfacher, als die Herstellung einer Zunge mit sich ändernder Stärke.

Die der Klemmsicherung gegenüberliegende Seite des Antriebsteils der Mutter bildet eine Anlagefläche, die z. B. unmittelbar an einem über eine Verschraubung zu befestigenden Bauteil anliegt. Diese Fläche kann entweder plan oder konkav oder konvex ausgebildet sein, je nach den technischen Anforderungen bzw. dem zu befestigenden Bauteil. Auch eine kugelkalottenförmige Ausgestaltung der gesamten Anlagefläche der Mutter oder ein relativ zur Längsachse gesehen schräger Verlauf einer planen Anlagefläche ist möglich. Prinzipiell kann auch ein an sich bekannter Federring zwischen Mutter und einem beliebigen Bauteil vorhanden sein, der zusätzlich dazu dient, den Anpressdruck der Mutter gleichmäßig auf eine größere Fläche zu verteilen.

### c) Ausführungsbeispiele

Weitere Einzelheiten, Merkmale und Vorteile der Erfindung lassen sich dem nachfolgenden Beschreibungsteil entnehmen, in dem anhand von Zeichnungen Ausführungsbeispiele der Erfindung näher dargestellt sind. Es zeigen:
- Fig. 1:: eine Mutter mit einer trapezförmigen Klemmzunge in Seitenansicht,
- Fig. 1A:: eine Mutter in Draufsicht,
- Fig. 2:: eine Mutter mit einer Klemmzunge im Querschnitt, und
- Fig. 3:: eine weitere Ausgestaltung einer Klemmzunge.
- Fig.4:: eine weitere Ausgestaltung einer Klemmzunge.

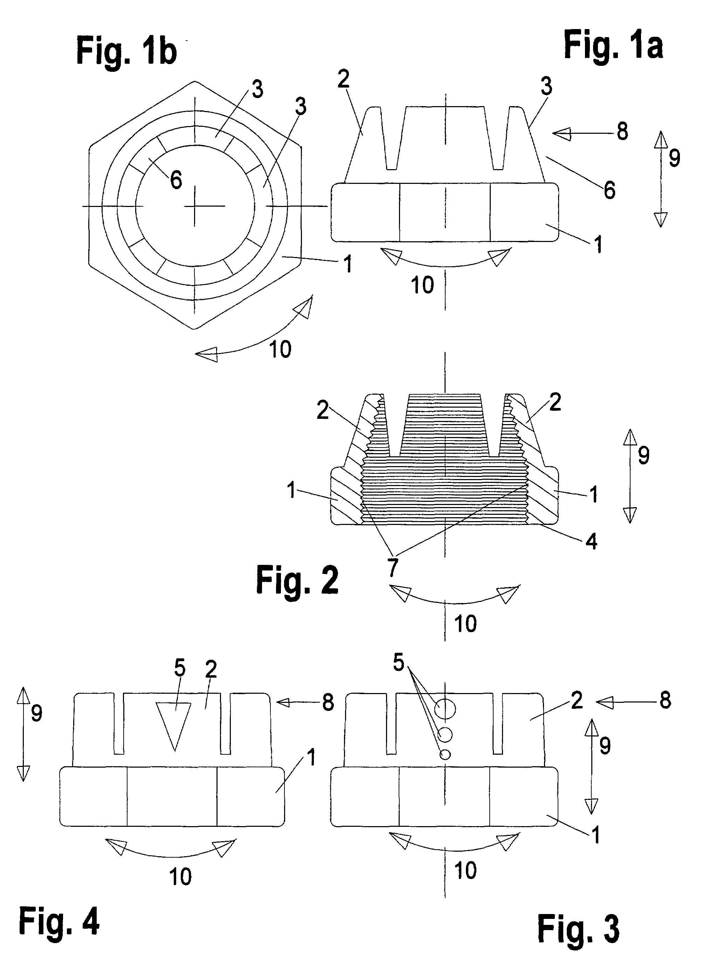

Bei dem in Fig. 1 dargestellten Ausführungsbeispiel der Erfindung handelt es sich um eine Mutter mit einem Antriebsteil 1, der an seinem Umfang an der Außenseite als Sechskant ausgebildet ist, um mit einem Schrauben- oder Ringschlüssel betätigt zu werden. Daran schließt sich die Klemmsicherung 8, bestehend aus mehreren Klemmzungen 2, an. Die Erstreckung der Klemmzungen 2 in Umfangsrichtung 10 nimmt dabei mit zunehmendem axialen 9 Abstand vom Antriebsteil 1 ab, vorzugsweise linear, um, wie hier dargestellt, eine trapezförmige Klemmzunge 2 zu erhalten. Die innen und/oder außen liegenden Kanten der seitlichen Flanken 3 und der dem Antriebsteil 1 abgewandten Seite der Klemmzungen 2 können abgeschrägt oder abgerundet sein, um das Aufschrauben der Mutter auf ein Außengewinde beispielsweise einer Gewindestange zu erleichtern und scharfe Kanten zu vermeiden.

Die Klemmzungen sind in Umfangsrichtung 10 gesehen voneinander beabstandet, so daß zwischen ihnen in axialer Richtung 9 verlaufende Schlitze 6 ausgebildet sind, wie in der Draufsicht in Fig. 1A dargestellt.

In Fig. 2 ist die Querschnittsdarstellung einer erfindungsgemäßen Mutter abgebildet, bei der der Antriebsteil 1 auf seinem Umfang als Sechskant ausgebildet ist, um mit einem Schrauben- oder Ringschlüssel betätigt zu werden. An der den Klemmzungen 2 gegenüberliegenden Stirnseite der Mutter ist eine Anlagefläche 4 ausgebildet, die unmittelbar an einem über eine Verschraubung zu befestigenden Bauteil anliegen kann. Die Anlagefläche 4 kann konkav, konvex oder plan ausgeführt sein, wobei sie auch gegen den senkrecht zur Längsachse der Mutter orientierten Radius geneigt ausgerichtet sein kann. Die radiale Dicke oder Wandstärke der Klemmzungen 2 ist, wie in dieser Darstellung ersichtlich, über ihre gesamte Erstreckung in axialer 9 und auch in Umfangsrichtung 10 konstant, was die Herstellung erleichtert. Dadurch hängt die Größe des Klemmmoments der Klemmzunge 2 auf dem Außengewinde einer Gewindestange lediglich vom Material der Klemmzunge 2 und dem Neigungswinkel gegen die Längsachse der Mutter ab. Die von der Klemmzunge 2 auf das Außengewinde ausgeübte Kraft ist abhängig von der Erstreckung der Klemmzunge 2 in Umfangsrichtung 10 und wieweit die Gewindestange in das sich mit zunehmendem axialen Abstand 9 vom Antriebsteil 1 verjüngende Innengewinde 7 der Klemmsicherung 8 der Mutter eingeschraubt ist.

Eine andere Möglichkeit zur Reduzierung der Breite der Klemmzungen 2 in Umfangsrichtung 10 besteht darin, daß in axialer Richtung 9 fortlaufend Durchbrüche 5, vorzugsweise runde, in die Klemmzungen 2 eingebracht werden, deren Durchmesser mit zunehmendem Abstand vom Antriebsteil 1 zunimmt, wie in Fig. 3 dargestellt. Die Flanken 3 der Klemmzungen 2 verlaufen dabei achsparallel, so daß die Schlitze 6 zwischen den Klemmzungen in axialer Richtung 9 eine in Umfangsrichtung 10 konstante Breite haben. Mit den Durchbrüchen 5 wird die Biegesteifigkeit der Klemmzungen 2 zunehmend reduziert, um ebenso eine konstante Flächenpressung bzw. konstantes Klemmmoment zu erhalten.

Alternativ dazu kann eine Klemmzunge 2 mit achsparallelen Flanken 3 auch mit einem einzigen Durchbruch 5, wie in Fig. 4 dargestellt, ausgestattet sein. Zur Reduzierung der Biegesteifigkeit der Klemmzunge 2 nimmt die Breite des Durchbruchs 5 mit zunehmendem Abstand vom Antriebsteil 1 zu, vorzugsweise linear, um einen im wesentlichen dreieckigen Durchbruch 1 zu erhalten, dessen Spitze zum Antriebsteil 1 weist.

### BEZUGSZEICHENLISTE

- 1: Antriebsteil
- 2: Klemmzunge
- 3: Flanke der Klemmzunge
- 4: Anlagefläche
- 5: Durchbruch
- 6: Schlitz
- 7: Innengewinde
- 8: Klemmsicherung
- 9: axiale Längsrichtung der Mutter
- 10: Umfangsrichtung der Mutter

## Patentansprüche

1. Mutter mit
- einem Antriebsteil (1), der auf seinem Umfang vorzugsweise in Form eines Mehrkants zum Angriff eines Werkzeugs ausgebildet ist, und
- einer an den Antriebsteil (1) in axialer Richtung (9) sich anschließenden Klemmsicherung (8) aus
- mehreren durch in axialer Richtung (9) verlaufende Schlitze (6) beabstandete, an den Antriebsteil (1) angeformte Klemmzungen (2), und
- einem Innengewinde (7) zum Aufschrauben der Mutter auf eine Gewindestange oder dergleichen im Antriebsteil (1) und/oder in der Klemmsicherung (8), wobei der Innendurchmesser des Innengewindes (7) mit zunehmendem axialen Abstand (9) vom Antriebsteil (1) in der Klemmsicherung (8) zumindest abschnittsweise abnimmt,
- so dass das Auseinanderdrücken der Klemmzungen in radialer Richtung beim Aufschrauben auf einen Gewindebolzen eine Klemmwirkung durch elastische Verformung der Zungen erzeugt, solange dieser Vorgang innerhalb der Elastizitätsgrenzen für die Verformung der Klemmzungen liegt,
**dadurch gekennzeichnet, dass**
die in Umfangsrichtung (10) der Mutter gemessene wirksame Erstreckung der Klemmzungen (2) mit in axialer Richtung (9) gesehen zunehmendem Abstand vom Antriebsteil (1) abnimmt.

2. Mutter nach Anspruch 1,
**dadurch gekennzeichnet, daß**
in den Klemmzungen (2) radiale Durchbrüche (5) angebracht sind.

3. Mutter nach Anspruch 1 oder 2,
**dadurch gekennzeichnet, daß**
in den Klemmzungen (2) mehrere Durchbrüche (5) in axialer Richtung (9) aufeinanderfolgend vorhanden sind, insbesondere deren Durchmesser mit zunehmendem axialen Abstand (9) vom Antriebsteil (1) zunimmt.

4. Mutter nach einem der vorhergehenden Ansprüche,
**dadurch gekennzeichnet, daß**
die an den Antriebsteil (1) angeformten Klemmzungen (2) gegen die Längsachse der Mutter nach innen geneigt sind.

5. Mutter nach einem der vorhergehenden Ansprüche,
**dadurch gekennzeichnet, daß**
sechs Klemmzungen (2) vorhanden sind.

6. Mutter nach einem der vorhergehenden Ansprüche,
**dadurch gekennzeichnet, daß**
die in Umfangsrichtung (10) der Mutter gemessene Erstreckung der Klemmzungen (2) stetig abnimmt, insbesondere linear.

7. Mutter nach einem der vorhergehenden Ansprüche,
**dadurch gekennzeichnet, daß**
die radiale Dicke der Klemmzungen (2) in axialer Richtung (9) konstant ist.

8. Mutter nach einem der vorhergehenden Ansprüche,
**dadurch gekennzeichnet, daß**
der Antriebsteil (1) auf seiner in axialer Richtung (9) der Klemmsicherung (8) entgegengesetzten Seite eine Anlagefläche (4) für ein anliegendes Bauteil aufweist, insbesondere die Oberfläche der Anlagefläche (4) plan oder konkav oder konvex oder gegen die axiale Längsachse der Mutter mit Klemmsicherung (8) geneigt ist.

## Claims

1. Nut with
- a driving part (1) whose circumference is preferably polygonally shaped in order to be acted upon with a tool, and
- a clamping part for securing (8) disposed in the continuation of the driving part (1) in the axial direction (9), consisting of
- more clamping lugs (2) formed on the driving part (1), spaced by slots (6) extending in the axial direction (9), and
- an inside thread (7) to screw the nut on a threaded rod or the like, into the driving part (1) and/or the clamping part for securing (8), wherein as the axial distance (9) with respect to the driving part (1) increases, the inner diameter of the inside thread (7) decreases at least over some sections into the clamping part for securing (8),
- thus that the pulling apart of the clamping lugs in the radial direction on screwing on a threaded pin create an elastic deformation clamping effect as long as this process takes place within the elastic deformation limits of the clamping lugs, **characterized in that** the active extent of the clamping lugs (2), measured in the circumference direction (10) of the nut, decreases as the distance with respect to the driving part (1) increases, as seen in the axial direction (9).

2. Nut according to claim 1, **characterized in that** there are realized radial openings (5) in the clamping lugs (2).

3. Nut according to claim 1 or 2, **characterized in that**, in the clamping lugs (2) there are more successive openings (5) in the axial direction (9), in particular whose diameter increases as the axial distance (9) with respect to the driving part (1) increases.

4. Nut according to one of the preceding claims, **characterized in that** the clamping lugs (2) formed on the driving part (1) are tilted towards the inside towards the longitudinal axis of the nut.

5. Nut according to one of the preceding claims, **characterized in that** there are six clamping lugs (2).

6. Nut according to one of the preceding claims, **characterized in that** the extent of the clamping lugs (2) measured in the circumference direction (10) of the nut decreases continuously, in particular linearly.

7. Nut according to one of the preceding claims, **characterized in that** the radial thickness of the clamping lugs (2) is constant in the axial direction (9).

8. Nut according to one of the preceding claims, **characterized in that** the driving part (1), on its opposite side in the axial direction (9) with respect to the clamping part for securing (8), has a setting surface (4) for a contiguous piece, and in particular the surface of the setting surface (4) is plane or concave or convex or tilted towards the axial longitudinal axis of the nut with damping part for securing it (8).

## Revendications

1. Écrou avec
- un côté d'entraînement (1) qui sur sa circonférence est réalisée de préférence en forme de polygone pour l'empoigner avec un outil, et
- un dispositif de fixation par serrage (8) situé dans la continuation du côté d'entraînement (1) dans la direction axiale (9), de
- plusieurs lamelles de serrage (2) formées sur le côté d'entraînement (1) distancées par des fentes (6) déroulées dans la direction axiale (9), et
- un filet intérieur (7) pour le vissage de l'écrou sur une tige filetée ou quelque chose semblable dans le côté d'entraînement (1) et/ou dans le dispositif de fixation par serrage (8), où le diamètre intérieur du filet intérieur (7), une fois avec l'augmentation de la distance axiale (9) à l'égard du côté d'entraînement (1), se réduit au moins sur certaines portions dans le dispositif de fixation par serrage (8),
- de sorte que le désassemblage des lamelles de serrage en direction radiale au vissage sur un boulon fileté crée un effet de serrage par déformation élastique le temps que ce procédé se déroule entre les limites d'élasticité pour la déformation des lamelles de serrage, **caractérisé en ce que**, l'étendue active des lamelles de serrage (2) mesurée dans la direction de la circonférence (10) de l'écrou, se réduit une fois avec l'augmentation de la distance à l'égard du côté d'entraînement (1) regardant dans la direction axiale (9).

2. Écrou selon la revendication 1, **caractérisé en ce que** dans les lamelles de serrage (2) on réalise des perforations (5) radiales.

3. Écrou selon la revendication 1 ou 2, **caractérisé en ce que**, dans les lamelles de serrage (2) il y a plusieurs perforations (5) successives dans la direction axiale (9), spécialement dont le diamètre augmente une fois avec l'augmentation de la distance (9) axiale à l'égard du côté d'entraînement (1).

4. Écrou selon l'une des revendications antérieures, **caractérisé en ce que** les lamelles de serrage (2) formées sur le côté d'entraînement (1) sont inclinées vers l'intérieur vers l'axe longitudinal de l'écrou.

5. Écrou selon l'une des revendications antérieures, **caractérisé en ce qu'**il y a six lamelles de serrage (2).

6. Écrou selon l'une des revendications antérieures, **caractérisé en ce que**, l'étendue des lamelles de serrage (2) mesurée dans la direction de la circonférence (10) de l'écrou, se réduit continuellement, spécialement de manière linéaire.

7. Écrou selon l'une des revendications antérieures **caractérisé en ce que**, l'épaisseur radiale des lamelles de serrage (2) est constante dans la direction axiale (9).

8. Écrou selon l'une des revendications antérieures **caractérise en ce que**, le côté d'entraînement (1), sur son côté opposé dans la direction axiale (9) à l'égard du dispositif de fixation par serrage (8), présente une surface de position (4) pour une pièce voisine, spécialement la face de la surface de position (4) est plane ou concave ou convexe ou inclinée vers l'axe longitudinal axial de l'écrou avec dispositif de fixation par serrage (8).
